# FASCICULE DE BREVET EUROPEEN

(11) **EP 1 907 739 B1**
(45) Date de publication et mention de la délivrance du brevet: **27.05.2009**
(21) Numéro de dépôt: 06794499.1
(22) Date de dépôt: 26.07.2006
(51) Int. Cl.: F16L 3/223

(54) **ENSEMBLE A MONTER SOUS UN APPUI FIXE DU TYPE PLANCHER DE LA CAISSE D'UN VEHICULE AUTOMOBILE, ET PROCEDE DE MISE EN OEUVRE DE CET ENSEMBLE**
ANORDNUNG ZUR ANBRINGUNG UNTER EINER BEFESTIGTEN HALTERUNG, WIE KRAFTFAHRZEUG-GEHÄUSEBODEN UND VERFAHREN ZUR BENUTZUNG DERSELBEN
ASSEMBLY TO BE MOUNTED UNDER A FIXED SUPPORT SUCH AS A MOTOR VEHICLE BODY SHELL FLOOR, AND METHOD FOR USING SAME

(30) Priorité: 27.07.2005 FR 0552324; 27.07.2005 FR 0552325; 27.07.2005 FR 0552327
(43) Date de publication de la demande: 09.04.2008
(73) Titulaire: Peugeot Citroën Automobiles Société Anonyme, 78140 Velizy Villacoublay (FR)
(72) Inventeur: BESSON, Jack, F-78920 Mantes La Jolie (FR)
(86) Numéro de dépôt international: PCT/FR2006/050748
(87) Numéro de publication internationale: WO 2007/012784

(56) Documents cités:
- EP-A- 0 599 662
- US-A- 3 894 706
- US-A- 4 244 544
- PATENT ABSTRACTS OF JAPAN vol. 1997, no. 01, 31 janvier 1997 (1997-01-31) & JP 08 251775 A (SUMITOMO WIRING SYST LTD), 27 septembre 1996 (1996-09-27)

## Description

La présente invention est relative à un ensemble comportant un axe porteur, propre à être solidarisé de la partie inférieure d'un appui fixe, notamment du plancher de la caisse qui forme l'habitacle d'un véhicule automobile, et sous lequel doit être disposé et immobilisé par l'intermédiaire d'un ou de plusieurs axes de ce genre, au moins un râtelier multiple assurant le support de tuyauteries, câbles, faisceaux ou éléments similaires, de forme allongée et répartis parallèlement les uns aux autres, ces élément assurant, dans le cas de tuyauteries ou de conduites analogues, par exemple le transfert d'un liquide aux organes de freinage des roues ou du carburant du réservoir vers le moteur, ou encore dans le cas de câbles, l'acheminement d'informations électriques à divers organes du véhicule.

L'invention concerne les structures particulières de l'axe porteur et du râtelier multiple adapté à être monté sur cet axe porteur, également d'un organe de protection du râtelier qui lui est associé et vise en outre le procédé mis en oeuvre pour réaliser ce montage.

La mise en place simple et le maintien sûr d'éléments divers du genre précité sous le plancher de l'habitacle d'un véhicule automobile constituent des impératifs essentiels, exigeant la mise en oeuvre de moyens de support appropriés, assurant une grande fiabilité de ce montage et notamment de la fixation mutuelle de ces éléments, évitant en particulier que le râtelier sur lequel sont disposés les câbles et tuyauteries ne se détache intempestivement en raison des chocs, secousses et autres efforts multiples qui surviennent lors de l'utilisation du véhicule, notamment lorsqu'il roule ou par suite d'un freinage brutal, tout en permettant une accessibilité aisée à ces moyens pour autoriser leur démontage en cas de besoin, en vue de réparation, entretien ou remplacement.

De façon usuelle, les râteliers de support de ce genre sont montés et fixés sous le plancher de l'habitacle, puis bloqués en position à l'aide d'un écran de protection situé en dessous, également fixé au plancher par des organes de liaison qui traversent les râteliers ainsi maintenus immobilisés entre le plancher et l'écran.

A titre indicatif, une solution de ce type est décrite dans le brevet européen EP 0 599 662, qui illustre une attache pour tuyauteries, tubes ou câbles sous le plancher de la carrosserie d'un véhicule, réalisée au moyen d'un râtelier porteur comprenant en son centre un orifice de passage pour un goujon solidaire de la partie inférieure du plancher de l'habitacle, ce râtelier comprenant des encoches ouvertes vers le haut, parallèles entre elles et aptes à contenir les tuyauteries ou câbles, avant d'être appliqué sous le plancher et bloqué par un organe de protection extérieur formant écran, qui s'accouple avec le râtelier en étant rendu solidaire celui-ci grâce à un écrou coopérant avec l'extrémité filetée du goujon.

Or, ce système à goujon fileté et écrou de blocage n'est pas bien adapté et notamment ne permet pas une intervention rapide sur les câbles ou tuyauteries portés par le râtelier. De plus, si l'écrou monté sur le goujon se dévisse accidentellement ou si ce dernier est rompu par suite d'un choc ou autre, l'organe de protection formant écran de maintien se détache immédiatement de sorte que le râtelier n'est plus maintenu et tombe à son tour en s'écartant du plancher, les câbles et tuyauteries qu'il supporte n'étant plus immobilisés mais restent suspendus sous l'habitacle avec un risque rapide de détérioration.

La présente invention est relative à un ensemble de montage particulier où entrent en jeu un axe porteur, un râtelier de support multiple et un organe de protection situé en dessous, dont la structure et les modalités de mise en oeuvre évitent cet inconvénient, le retrait délibéré ou accidentel de l'organe de protection n'ayant pas pour effet de libérer simultanément le râtelier qui reste en place sur l'axe porteur sous le plancher de l'habitacle jusqu'à ce qu'il soit lui-même éventuellement retiré par une opération distincte de la précédente.

A cet effet, l'ensemble de montage selon l'invention comporte un râtelier de support multiple, un axe porteur apte à supporter le râtelier, fixé par une de ses extrémités en dessous d' un panneau d' appui du genre plancher d'un habitacle de véhicule automobile, s'étendant perpendiculairement vers le bas à partir de ce panneau, le râtelier supportant des câbles, tuyauteries ou analogues, disposés parallèlement à et sous la surface du panneau d'appui, et un organe de protection et de blocage monté sous le râtelier pour appliquer et immobiliser celui-ci contre le panneau, l'axe porteur faisant saillie externe et comprenant, centrés sur cet axe, un premier et un deuxième éléments sphériques distincts, superposés, aptes à réaliser l'accrochage sur celui-ci, respectivement du râtelier et de l'organe de protection l'un en dessous de l'autre, ces premier et deuxième éléments sphériques coopérant avec des moyens formant pince, respectivement portés par le râtelier et l'organe de protection pour les maintenir en position déterminée sous le panneau d'appui, ledit râtelier comportant un plateau transversal, comprenant sensiblement dans sa partie centrale une ouverture pour le passage du deuxième élément sphérique de l'axe porteur, cette ouverture étant prolongée dans le râtelier multiple en direction du panneau d'appui par une collerette circulaire délimitant un logement de réception et de maintien du premier élément sphérique de l'axe porteur, ce logement de forme sphérique comportant une partie terminale évasée en regard du panneau d'appui, à l'opposé de l'ouverture de passage.

Selon l'invention, l'axe porteur de l'ensemble de montage comporte, faisant saillie externe et centrés sur cet axe, un premier et un deuxième éléments sphériques distincts, superposés, aptes à réaliser l'accrochage sur celui-ci, respectivement du râtelier multiple et de l'organe de protection l'un en dessous de l'autre, ces premier et deuxième éléments sphériques coopérant avec des moyens formant pince, respectivement portés par le râtelier de support multiple et l'organe de protection pour les maintenir en position déterminée sous le panneau d'appui, les deux éléments sphériques présentent des diamètres différents, le premier élément, qui est le plus proche du panneau d'appui et qui supporte le râtelier de support multiple, ayant un diamètre supérieur à celui du deuxième élément, qui est le plus éloigné du panneau et qui supporte l'organe de protection.

De préférence également, le deuxième élément sphérique est prévu en bout de l'axe porteur à son extrémité opposée à celle qui est fixée au panneau d'appui.

Selon le cas, l'axe porteur est fixé sous le panneau d'appui par soudage, vissage, matriçage... ou par tout autre moyen approprié.

Selon une autre caractéristique, l'ensemble de montage se caractérise également en ce que en ce que la partie terminale de la collerette du râtelier présente une paroi suffisamment mince pour lui conférer une faculté limitée d'expansion vers l'extérieur, apte à accommoder l'introduction du premier élément sphérique de l'axe porteur dans le logement et comporte des fentes radiales, délimitant des doigts susceptibles de fléchir légèrement vers l'extérieur pour la réception dans le logement du premier élément sphérique.

Selon une autre caractéristique, le diamètre de l'ouverture de passage de l'axe porteur dans la partie centrale du râtelier de support multiple est supérieur à celui du deuxième élément sphérique.

Selon encore une autre caractéristique, le plateau transversal du râtelier de support multiple comporte une pluralité de nervures parallèles en saillie par rapport au plateau transversal, délimitant deux à deux des rainures ouvertes longitudinales, parallèles entre elles et s'étendant selon la longueur du plateau pour la réception des câbles et tuyauteries portés par le râtelier.

De préférence, les rainures longitudinales de réception du râtelier multiple sont ménagées dans le plateau transversal de part et d'autre de l'axe porteur.

Selon encore une autre caractéristique, l'organe de protection du râtelier multiple est constitué par un écran, apte à s'étendre sensiblement parallèlement au plateau transversal du râtelier multiple et, disposé au droit de l'axe porteur, par un coupleur comprenant une empreinte ouverte dont le diamètre est sensiblement égal à celui du deuxième élément sphérique de l'axe qui s'y engage sur une profondeur appropriée, de telle sorte que l'écran s'applique fermement sous le plateau transversal en bloquant le râtelier multiple contre le panneau d'appui.

Avantageusement, l'écran comporte en son centre une collerette circulaire qui entoure l'axe porteur et s'applique contre le fond d'un évidement en regard prévu sous le plateau transversal.

De préférence, le coupleur associé à l'écran dans l'organe de protection, comporte un coupelle comprenant l'empreinte de réception du deuxième élément sphérique de l'axe porteur, prolongé vers le haut en direction du panneau d'appui par une zone évasée de manière à guider l'introduction de cet axe dans l'empreinte du coupleur.

De préférence également, le matériau du coupleur présente une relative élasticité pour lui permettre de former pince de maintien du deuxième élément sphérique de l'axe porteur, après introduction de celui-ci dans l'empreinte du coupleur.

En variante, le coupleur comporte au moins une collerette mince, expansible, délimitant l'empreinte de réception du deuxième élément sphérique de l'axe porteur.

L'invention concerne enfin un procédé de montage sur l'axe porteur fixé au panneau d'appui, du râtelier de support multiple et de son organe de protection formé d'un écran et d'un coupleur, caractérisé en ce qu'il consiste à garnir les rainures longitudinales ouvertes du plateau transversal avec les câbles et tuyauteries, à présenter le plateau ainsi garni sous le panneau d'appui et à l'appliquer contre ce plancher avec son organe de protection de telle sorte que l'axe porteur traverse l'ouverture de passage du plateau jusqu'à ce que le premier élément sphérique s'engage dans la partie terminale qui prolonge le logement de réception où il est immobilisé par l'effet de pincement assuré par cette partie terminale, le deuxième élément sphérique de l'axe porteur traversant librement l'ouverture en se prolongeant sous le râtelier de support multiple de sorte que l'écran de l'organe de protection monté sous le râtelier soit simultanément immobilisé par engagement de ce deuxième élément sphérique dans le logement de réception du coupleur l'écran.

D'autres caractéristiques des divers éléments entrant en jeu en combinaison dans l'ensemble selon l'invention et de leur procédé de montage sous le plancher de l'habitacle d'un véhicule automobile, apparaîtront encore à travers la description qui suit de plusieurs exemples de réalisation, donnés à titre indicatif et non limitatif, en référence aux dessins annexés sur lesquels :
- La Figure 1 est une vue schématique en coupe verticale des moyens pour supporter des câbles ou tuyauteries sous le plancher de l'habitacle d'un véhicule automobile conformément à l'invention, l'axe porteur, le râtelier multiple et l'organe de protection de celui-ci étant représentés en position séparée.
- La Figure 2 est une vue en coupe analogue à la Figure 1 où seul le râtelier multiple est illustré en position montée sur l'axe porteurs, l'organe de protection étant séparé du râtelier.
- La Figure 3 est une vue des éléments de la Figure 1 dans leur position assemblée sur l'axe porteur.
- La Figure 4 est conforme à la Figure 3, le râtelier multiple comportant dans ce cas et selon une variante, une agrafe de maintien pour parfaire le maintien des câbles et tuyauteries sur ce râtelier.
- La Figure 5 illustre une variante de réalisation de l'organe de protection.
- La Figure 6 est une vue de dessus de la variante de la Figure 5.
- Les Figures 7 et 8 sont des vues similaires à celles des Figures 1 et 2, illustrant des modifications de détail pouvant être apportées au râtelier multiple et à son organe de protection.
- La Figure 9 est une vue en coupe partielle de la Figure 7, selon la ligne IX - IX de cette dernière.

On repris sur ces diverses figures les mêmes chiffres de référence pour désigner les organes identiques illustrés sur chacune d'elles.

Sur ces figures, la référence 1 désigne un panneau d'appui métallique, notamment constitué par le plancher de la caisse ou de l'habitacle (non représenté) d'un véhicule automobile, sous lequel doivent être fixés des câbles ou tuyauteries 2, destinées à assurer le transfert de fluide appropriés (liquide de freinage, carburant, liquide en circulation dans le système de chauffage du véhicule...) ou d'informations électriques échangées entre des organes disposés respectivement à l'avant et à l'arrière de l'habitacle.

Ces câbles et tuyauteries 2 se présentant de façon générale sous la forme d'éléments allongés, figurés schématiquement sur les dessins, avec une section circulaire et qui s'étendent sous le plancher de l'habitacle au voisinage immédiat de la face inférieure de celui-ci.

On conçoit aisément que ces câbles et tuyauteries doivent être convenablement immobilisés et maintenus en position, sans que les chocs auxquels le véhicule peut être soumis en fonctionnement, notamment lorsqu'il roule sur un terrain lui imposant des secousses variées et répétées, ou encore lorsqu'il est soumis à des efforts notables, en particulier lors des phases d'accélération et de freinage, aient une incidence sur cette fixation.

Dans ce but, les câbles et tuyauteries 2 sont avantageusement supportés par un râtelier multiple 3 dans lequel ils sont convenablement immobilisés, en étant disposés parallèlement les uns aux autres sous le panneau d'appui 1, ce râtelier, dont la structure particulière est décrite ci-après, étant aménagé pour coopérer avec un axe porteur 4 d'une part, et avec un organe de protection inférieur 5 d'autre part, ce dernier étant spécialement conçu pour immobiliser le râtelier 3 sur cet axe.

L'axe porteur 4 comporte un corps cylindrique 6, s'étendant verticalement sous le panneau d'appui 1, lui-même sensiblement horizontal, et présente dans l'exemple considéré un épaulement 7, prévu à son extrémité supérieure.

Cet axe 4 est fixé au panneau 1 au droit de l'épaulement 7 par tout moyen approprié (non représenté), notamment par vissage, soudage, matriçage ou autre et dont la nature est indifférente.

Conformément à l'invention, l'axe porteur 4 comporte un premier élément sphérique 8, prévu en relief dans la partie courante du corps 6 et à son extrémité basse, opposée à l'épaulement 7, un deuxième élément sphérique 9, dont le diamètre est légèrement supérieur à celui de cette partie courante de l'axe 4 mais notablement inférieur à celui du premier élément 8.

Entre le panneau d'appui 1 et le premier élément sphérique 8 d'une part, entre les deux éléments sphériques 8 et 9 d'autre part, le corps cylindrique 6 de l'axe porteur 4 peut également présenter des diamètres différents.

La hauteur totale de l'axe porteur 4 est déterminée par ailleurs en fonction des conditions de montage sur celui-ci du râtelier de support multiple 3 et de l'organe de protection 5, comme exposé ci-dessous.

Le râtelier multiple 3, supportant les câbles ou tuyauteries 2, comporte un plateau transversal 10 avec, dans sa partie centrale, une ouverture 11 dont la dimension en largeur est suffisante pour permettre le libre passage de l'axe porteur 4 et notamment du deuxième élément sphérique 9 lorsque le râtelier est engagé sur cet axe.

L'ouverture 11 se prolonge dans le plateau 10 du râtelier de support 3 par une collerette circulaire 12 délimitant intérieurement un logement de réception sphérique 13 dans lequel peut être amené le premier élément 8 de l'axe 4 lorsque ce râtelier est engagé sur cet axe pour se situer au plus près de la face inférieure du panneau d'appui 1.

La collerette 12 comporte une partie terminale évasée 14, raccordée au logement 13, facilitant le guidage de l'axe, cette partie terminale 14 présentant une paroi suffisamment mince pour lui conférer une faculté limitée d'expansion vers l'extérieur, de telle sorte que, sous l'effort axial qui s'exerce sur elle par le contact avec le premier élément sphérique 8, elle puisse ainsi s'ouvrir momentanément et autoriser l'introduction de cet élément dans le logement avant qu'elle ne se rétracte pour reprendre sa forme initiale en pinçant l'élément et en immobilisant de la sorte le plateau transversal 10 du râtelier sur l'axe porteur 4.

Le plateau 10 peut être réalisé en tout matériau adapté à sa fonction et à son environnement ; il peut être métallique ou formé d'un matériau composite. La collerette 12 peut être venue de fabrication avec le plateau ou rapportée sur celui-ci, notamment si elle est réalisée en un matériau permettant à la partie terminale évasée 14 de s'expanser convenablement dans les conditions précitées.

La partie terminale 14 de la collerette 12 peut comporter des fentes radiales (non représentées), délimitant entre elles des doigts susceptibles de fléchir légèrement vers l'extérieur lorsque le premier élément sphérique 8 de l'axe porteur 4 force l'entrée dans le logement 13, avant qu'il ne s'immobilise en étant ainsi pincé sur cet axe.

Le plateau transversal 10 s'étend de préférence de façon symétrique de part et d'autre de l'axe porteur 4 en présentant, dans l'exemple de réalisation illustré, deux ailes légèrement inclinées vers le bas, cette disposition n'ayant aucun caractère impératif, le plateau pouvant comporter toute autre forme appropriée pour s'adapter au mieux sous le panneau 1 qui constitue le plancher de l'habitacle. Notamment, ce plateau pourrait comporter, au lieu de deux ailes inclinées vers le bas, deux ailes droites situées dans le même plan horizontal dans le prolongement l'une de l'autre sous le panneau 1.

Dans sa face dirigée vers le panneau 1, le plateau 10 comporte une pluralité de nervures parallèles en saillie 15, qui délimitent deux à deux, sur le dessus du plateau et en regard du panneau d'appui 1, des rainures ouvertes 16 dans lesquelles les câbles ou tuyauteries 2 peuvent être mis en place.

Avantageusement, ces nervures comportent une partie d'extrémité 17 légèrement débordante vers l'intérieur des rainures correspondantes pour assurer le maintien des câbles et tuyauteries sur le plateau, en évitant que les chocs ou secousses créées lors de l'utilisation du véhicule n'aient tendance à les faire sortir de ces rainures, en n'étant plus dans ce cas supportées et maintenues dans le râtelier 3.

Le montage du râtelier de support multiple 3 sous le panneau d'appui 1 sur l'axe porteur 4 étant ainsi effectué, on met ensuite en place sous le plateau transversal 10 du râtelier l'organe de protection 5.

Celui-ci se compose principalement d'un écran protecteur 18 dont les côtés, adaptés pour se placer sous les deux ailes du plateau 10, présentent en conséquence un profil sensiblement identique.

L'écran 18 comporte par ailleurs, fixé à celui-ci en son centre, un coupleur 19, lequel est principalement constitué par une coupelle 20, obtenue par surmoulage et comprenant intérieurement une empreinte 21, ouverte en partie supérieure vers le panneau d'appui 1, cette empreinte de forme sphérique étant adaptée à recevoir le deuxième élément 9 prévu en bout de l'axe porteur 4, de manière à ce que l'écran 18 s'applique sous le plateau 10 en le bloquant ainsi en position contre le panneau.

Comme la collerette 12 du plateau, le coupleur 19 comporte avantageusement une partie terminale évasée 22, apte à guider l'extrémité de l'axe 4 munie du deuxième élément sphérique 9, de manière à amener ce dernier à l'intérieur de l'empreinte 21.

Le coupleur 19 est réalisé en un matériau présentant une relative élasticité lui permettant de manière analogue de s'expanser légèrement vers l'extérieur pour assurer l'introduction dans l'empreinte 21 de cet élément avant de le pincer une fois mis en place.

En variante et comme illustré sur les dessins, le coupleur 19 peut comporter, du côté opposé à sa partie évasée 21, au droit de l'empreinte 21 et au moins une collerette mince 23 dont les bords peuvent être légèrement rapprochés pour produire par réaction une ouverture momentanée de l'empreinte 21 lors de l'introduction du deuxième élément sphérique 9, le relâchement de la collerette permettant de pincer et d'immobiliser en place sous le râtelier 3 l'organe de protection 5 formé de l'écran 18 et du coupleur 19.

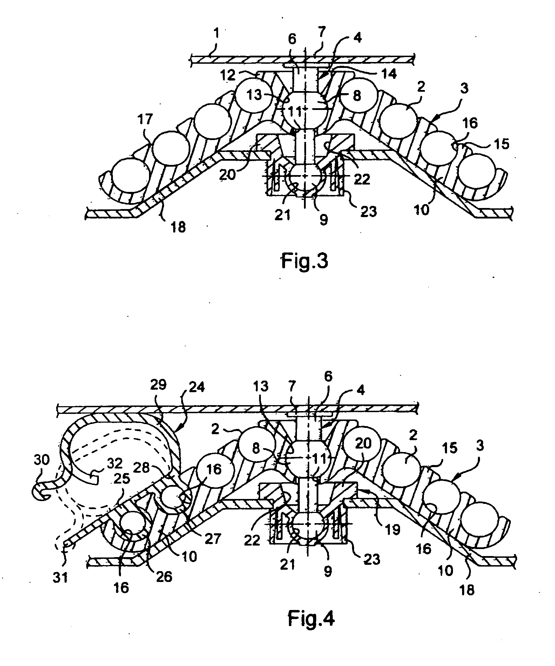

La hauteur de l'axe porteur 4, en particulier entre la base du plateau transversal 10 et le coupleur 19 qui se fixe sur le deuxième élément sphérique 9, est déterminée par construction de telle sorte que l'organe de protection 5 puisse s'appliquer exactement sous le plateau 10, en maintenant fermement celui-ci sous le panneau d'appui 1, comme illustré sur la Figure 3.

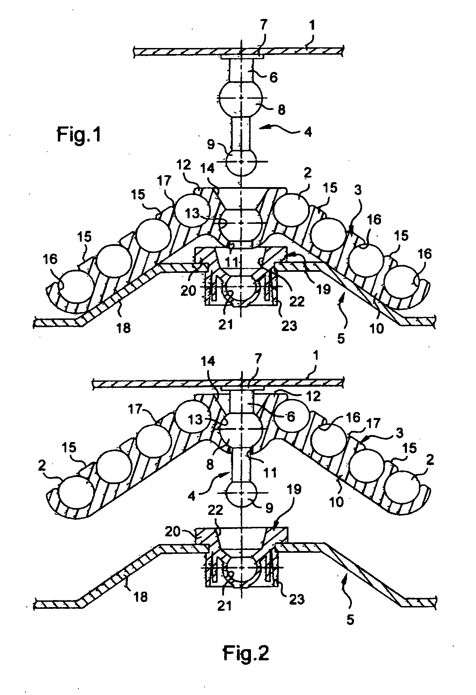

Les Figures 1 à 3 illustrent clairement les phases successives du procédé de montage tel qu'il découle des explications qui précèdent, le plateau transversal 10 du râtelier de support 3, préalablement garni avec les câbles et tuyauteries, 2, étant d'abord engagé sur l'axe porteur 4 jusqu'à pincement du premier élément sphérique 8 dans le logement 13, l'organe de protection 5 avec le coupleur 19 monté dans la partie centrale de l'écran 18 étant ensuite fixé sous le râtelier par engagement du deuxième élément sphérique 9 dans l'empreinte 21 du coupleur.

La Figure 4 illustre un perfectionnement pouvant être avantageusement apporté au plateau râtelier de support multiple 3, en particulier lorsque les câbles et tuyauteries 2 à monter dans les rainures 16 du plateau transversal 10, présentent un volume dépassant celui de ces rainures, comme ce peut être notamment le cas avec des faisceaux de fils électriques, groupés entre eux.

Dans cette éventualité, le plateau transversal 10 du râtelier 3 peut être avantageusement associé à une agrafe de liaison 24, réalisée en un matériau souple et dont la structure est illustrée dans la partie gauche de la vue en coupe de cette Figure 4.

Cette agrafe 24 comporte notamment une semelle plate 25, solidarisée d'au moins deux éléments en saillie 26 et 27, agencés pour pouvoir s'engage dans deux rainures voisines 16 du plateau 10 afin d'immobiliser l'agrafe sur celui-ci.

La semelle 25 se prolonge selon un de ses bords d'extrémité 28, par une boucle 29, propre à entourer le faisceau de fils (non représenté), et à l'appliquer contre la face supérieure de la semelle, cette boucle se terminant, à son extrémité opposée à celle réunie au bord 28, par un moyen de fermeture 30 en forme de crochet de fixation, aménagé pour venir se fixer sur l'autre bord 31 de la semelle 25.

Avantageusement, la boucle 29 comporte intérieurement une saillie en forme de languette 32, qui s'applique contre la semelle 25 lorsque la boucle est fermée par son crochet 30, cette languette pouvant ainsi fléchir légèrement en procurant un effet de ressort à l'ouverture de la boucle.

Dans l'exemple décrit, l'écran 18 de l'organe de protection 5 présente des parties planes qui viennent directement s'appliquer sous des surfaces en regard dans le plateau transversal 10 du râtelier 3 afin de bloquer celui-ci en position.

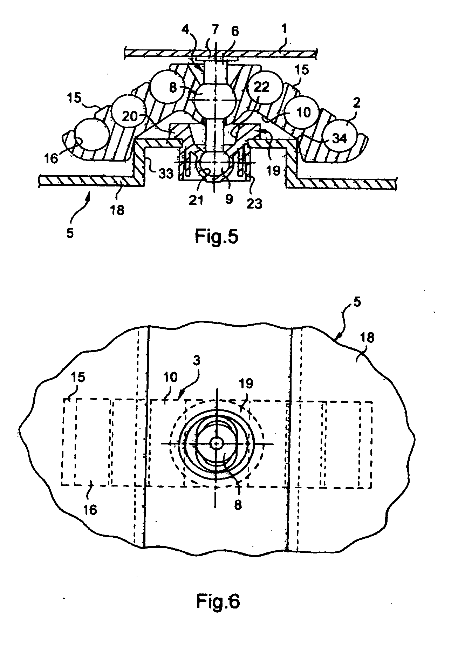

Dans la variante illustrée sur les Figures 5 et 6, l'écran 18 de l'organe de protection 5 comporte avantageusement une collerette circulaire 33, en saillie par rapport à l'écran et dirigée vers le panneau d'appui 1, cette collerette venant s'appliquer contre le fond d'un évidement 34 ménagé sous le plateau 10 du râtelier 3, en immobilisant celui-ci de façon similaire.

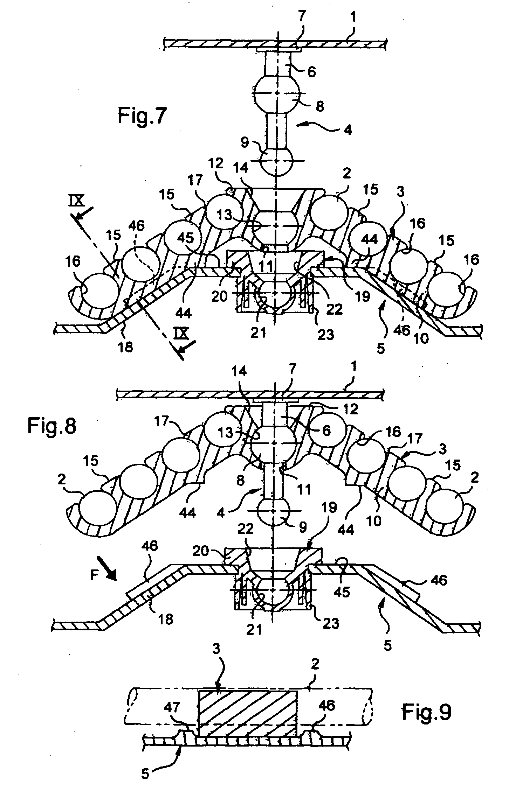

En outre et comme illustré dans la variante illustrée sur les Figures 7 et 8, on peut améliorer encore l'immobilisation relative du râtelier de support multiple 3 vis-à-vis de son organe de protection 5 lorsque ces deux éléments sont montés sur l'axe porteur 4, en faisant comporter à la face inférieure du plateau 10 des saillies 44 en relief sous ce plateau et présentant une face d'appui plane, apte à s'appliquer étroitement contre une portée horizontale 45 de l'écran 18, ce dernier pouvant de plus comporter, sur ses côtés latéraux parallèles aux ailes planes inclinées du plateau 10, des nervures d'entretoisement 46 et 47, entre lesquelles se dispose le plateau qu'elles maintiennent en position, comme le montre la vue en coupe transversale partielle de la Figure 9.

On réalise ainsi un ensemble de montage qui présente l'avantage d'assurer une fixation autonome sur l'axe porteur, d'une part du râtelier de support multiple, d'autre part de l'organe de protection avec son écran et son coupleur, de telle sorte que, en cas de démontage, voire de séparation accidentelle de l'écran, le râtelier reste en place sur l'axe, ce qui évite que les câbles et tuyauteries qu'il supporte ne soient eux-mêmes libérés, avec des risques immédiats de détérioration.

L'ensemble est simple à réaliser, facile à monter et à démonter pour intervention sur les câbles ou tuyauteries. Il s'applique bien entendu à n'importe quel type de véhicule et se prête aisément à un montage automatique en usine sur chaîne de fabrication.

Bien entendu, il va de soi que les moyens de l'invention ne se limitent pas aux exemples de réalisation plus spécialement décrits ci-dessus et représentés sur les dessins annexés ; elle en embrasse au contraire toutes les variantes.

De plus, l'invention s'étend également au procédé mis en oeuvre pour réaliser le montage (ou le démontage) des différents éléments à réunir, notamment de l'axe porteur, du râtelier de support multiple, de l'agrafe souple fixée à ce râtelier et enfin de l'organe de protection disposé sous le râtelier.

Pour assurer ce montage, on procède en premier lieu au positionnement des axes porteurs par immobilisation de ceux-ci sous le panneau d'appui qui forme le plancher ou la caisse de l'habitacle du véhicule, selon les dimensions propres de celui-ci et le nombre des câbles ou tuyauteries à supporter, avec l'élément sphérique de plus grand diamètre près de la face inférieur du plancher et l'élément de plus petit diamètre en dessous, pour la fixation du râtelier et de son organe de protection l'un en dessous de l'autre.

Indépendamment, on assure en atelier l'assemblage du ou des râteliers de support avec leurs organes de protection par mise en place et centrage de leurs écrans et des coupleurs qui assurent leur centrage relatif et leur liaison mutuelle, la forme de ces écrans et des coupleurs étant adaptée pour présenter le meilleur profil aérodynamique.

De préférence, cet assemblage est réalisé en positionnant l'organe de protection en dessous puis en faisant reposer sur celui-ci le râtelier de support avant de garnir ce dernier avec les câbles et tuyauteries

Ces câbles, notamment les faisceaux électriques nécessaires à la distribution d'énergie ou à la transmission de signaux, et ces tuyauteries ou conduites servant à acheminer des fluides divers, sont montés dans les rainures des râteliers de support, directement ou si nécessaire, pour tout ou partie de ceux-ci, groupés et maintenus dans des agrafes souples, rapportées et fixées sur ces râteliers de la façon décrite plus haut.

Les ensembles ainsi formés par les râteliers de support et les organes de protection, destinés à équiper chacun un des véhicules automobiles en cours de montage sur une chaîne de fabrication en série de ceux-ci, sont placés sur des luges ou autres moyens de portage équivalents, chaque luge étant, en défilement continu avec la chaîne, amenée et centrée en position inférieure sous le véhicule concerné puis accostée automatiquement sous le panneau d'appui qui forme le plancher de celui-ci par un mouvement de déplacement vertical permettant de venir fixer positivement chaque ensemble sous ce plancher par engagement et encliquetage simultané des évidements respectifs du râtelier et du coupleur formant pince sur les éléments sphériques de l'axe porteur en regard.

En variante, on peut prévoir de monter successivement et non plus simultanément, d'abord le râtelier équipé préalablement avec les câbles et tuyauteries, ensuite l'organe de protection formé de l'écran et de son coupleur.

Le pincement ainsi réalisé, notamment en partie inférieure et par le dessous, respectivement du logement de réception du râtelier de support et de la partie évasée du coupleur, avec les éléments sphériques de diamètres différents de l'axe porteur, procure une fixation particulièrement efficace à la manière d'une clé de voûte avec report des efforts dus au poids des pièces supportées sur ces moyens de pincement dans le sens qui accroît leur serrage relatif.

En effet, plus le poids est élevé, plus le pincement est grand, palliant de façon sûre aux efforts en sens inverse qui peuvent se produire lors de l'utilisation du véhicule, dus aux chocs ou autres sollicitations exercées sur les ensembles ainsi rapportés sur les axes porteurs prévus sous la caisse.

A noter que un ou plusieurs de ces axes peuvent ne pas avoir à supporter un râtelier mais seulement une partie d'un écran maintenu sous le panneau d'appui formant le plancher du véhicule au droit de cet axe, avec pincement dans ce cas, dans la coupelle surmoulée du coupleur associé à l'écran, du seul élément sphérique inférieur de l'axe porteur considéré.

Un autre avantage particulièrement décisif de la solution proposée par l'invention, est que, en cas de démontage des écrans seuls, les râteliers restent en place sous le plancher, ce qui évite aux câbles et tuyauteries portées par ceux-ci de se désolidariser du véhicule, en accroissant la sécurité du montage.

Bien entendu, si le démontage des râteliers est nécessaire, cette opération peut s'effectuer sans difficulté après retrait préalable des écrans et des coupleurs des organes de protection, avec seulement application d'un effort de traction vers le bas plus important que celui de poussée vers le haut exigé pour leur fixation sous la caisse.

Enfin, on peut relever que les démontages s'effectuant sans aucune détérioration des pièces concernées par simple traction, il est possible d'effectuer en suivant autant de remontages par simple poussée en sens inverse des râteliers et des écrans ce qui constitue un autre avantage de cette solution.

## Revendications

1. Ensemble de montage comportant un râtelier de support multiple (3), un axe porteur (4) apte à supporter le râtelier, fixé par une de ses extrémités en dessous d'un panneau d'appui (1) du genre plancher d'un habitacle de véhicule automobile, s'étendant perpendiculairement vers le bas à partir de ce panneau, le râtelier (3) supportant des câbles, tuyauteries ou analogues (2), disposés parallèlement à et sous la surface du panneau d'appui, et un organe de protection et de blocage (5) monté sous le râtelier pour appliquer et immobiliser celui-ci contre le panneau, l'axe porteur faisant saillie externe et comprenant, centrés sur cet axe, un premier (8) et un deuxième (9) éléments sphériques distincts, superposés, aptes à réaliser l'accrochage sur celui-ci, respectivement du râtelier (3) et de l'organe de protection (5) l'un en dessous de l'autre, ces premier et deuxième éléments sphériques coopérant avec des moyens (13,21) formant pince, respectivement portés par le râtelier et l'organe de protection pour les maintenir en position déterminée sous le panneau d'appui (1), ledit râtelier comportant un plateau transversal (10), comprenant sensiblement dans sa partie centrale une ouverture (11) pour le passage du deuxième élément sphérique (9) de l'axe porteur (4), cette ouverture étant prolongée dans le râtelier multiple (3) en direction du panneau d'appui (1) par une collerette circulaire (12) délimitant un logement de réception et de maintien (13) du premier élément sphérique (8) de l'axe porteur (4), ce logement de forme sphérique comportant une partie terminale évasée (14) en regard du panneau d'appui (1), à l'opposé de l'ouverture de passage (11), **caractérisé en ce que** l'axe porteur comporte, faisant saillie externe et centrés sur cet axe, un premier (8) et un deuxième (9) éléments sphériques distincts, superposés, aptes à réaliser l'accrochage sur celui-ci, respectivement du râtelier multiple (3) et de l'organe de protection (5) l'un en dessous de l'autre, ces premier et deuxième éléments sphériques coopérant avec des moyens (13,21) formant pince, respectivement portés par le râtelier de support multiple et l'organe de protection pour les maintenir en position déterminée sous le panneau d'appui (1), les deux éléments sphériques (8,9) présentent des diamètres différents, le premier élément (8), qui est le plus proche du panneau d'appui (1) et qui supporte le râtelier de support multiple (3), ayant un diamètre supérieur à celui du deuxième élément, qui est le plus éloigné du panneau et qui supporte l'organe de protection (5).

2. Ensemble selon la revendication 1, **caractérisé en ce que** le deuxième élément sphérique (9) de l'axe porteur (4) est prévu en bout de cet axe, à son extrémité opposée à celle fixée au panneau d'appui (1).

3. Ensemble selon la revendication 1, **caractérisé en ce que** l'axe porteur (4) est fixé sous le panneau d'appui (1) par soudage.

4. Ensemble selon la revendication 1, **caractérisé en ce que** l'axe porteur (4) est fixé sous le panneau d'appui (1) par vissage.

5. Ensemble selon la revendication 1, **caractérisé en ce que** l'axe porteur (4) est fixé sous le panneau d'appui (1) par matriçage.

6. Ensemble selon la revendication 1,
**caractérisé en ce que** la partie terminale (14) de la collerette (12) du râtelier (3) présente une paroi suffisamment mince pour lui conférer une faculté limitée d'expansion vers l'extérieur, apte à accommoder l'introduction du premier élément sphérique (8) de l'axe porteur (4) dans le logement et comporte des fentes radiales, délimitant des doigts susceptibles de fléchir légèrement vers l'extérieur pour la réception dans le logement (13) du premier élément sphérique (8).

7. Ensemble selon la revendications 6, **caractérisé en ce que** le diamètre de l'ouverture (11) du râtelier (3) pour le passage l'axe porteur (4) dans sa partie centrale, est supérieur à celui du deuxième élément sphérique (9).

8. Ensemble selon l'une des revendications 6 ou 7, **caractérisé en ce que** le plateau transversal (10) du râtelier (3) comporte une pluralité de nervures parallèles (15) en saillie par rapport à ce plateau transversal, délimitant deux à deux des rainures ouvertes longitudinales (16), parallèles entre elles et s'étendant selon la longueur du plateau pour la réception des câbles et tuyauteries (2).

9. Ensemble selon la revendication 8, **caractérisé en ce que** les rainures longitudinales (16) du râtelier (3) sont ménagées dans le plateau transversal (10) de part et d'autre de l'axe porteur (4).

10. Ensemble selon la revendication 6, **caractérisé en ce que** l'organe de protection et de blocage (5) du râtelier (3) est constitué par un écran (18), apte à s'étendre sensiblement parallèlement au plateau transversal 10) et, disposé au droit de l'axe porteur (4), par un coupleur (19) comprenant une empreinte ouverte (21) dont le diamètre est sensiblement égal à celui du deuxième élément sphérique (9) de l'axe qui s'y engage sur une profondeur appropriée, de telle sorte que l'écran s'applique fermement sous le plateau transversal en bloquant le râtelier contre le panneau d'appui (1).

11. Ensemble selon la revendication 10, **caractérisé en ce que** l'écran (18) de l'organe de blocage (5) comporte en son centre une collerette circulaire (33) qui entoure l'axe porteur (4) et s'applique contre le fond d'un évidement en regard (34), prévu sous le plateau transversal (10).

12. Ensemble selon l'une des revendications 10 ou 11, **caractérisé en ce que** le coupleur (19) de l'organe de blocage (5), associé à l'écran (18), comporte un coupelle (20) comprenant l'empreinte (21) de réception du deuxième élément sphérique (9) de l'axe porteur (4), prolongé vers le haut en direction du panneau d'appui (1) par une zone évasée (22), de manière à guider l'introduction de cet axe dans l'empreinte (21) du coupleur.

13. Ensemble selon la revendication 12, **caractérisé en ce que** le matériau du coupleur (19) de l'organe de blocage (5), présente une relative élasticité pour lui permettre de former pince de maintien du deuxième élément sphérique (9) de l'axe porteur (4), après introduction de celui-ci dans son empreinte (21).

14. Ensemble selon l'une quelconque des revendications 10 à 13, **caractérisé en ce que** le coupleur (19) de l'organe de blocage (5), comporte au moins une collerette mince (23), expansible, au droit de l'empreinte (21) recevant le deuxième élément sphérique (9) de l'axe porteur (4).

15. Procédé de montage sur un axe porteur d'un ensemble constitué d'un râtelier de support et d'un organe de blocage, selon la revendication 10 **caractérisé en ce qu'**il consiste en premier lieu à garnir les rainures longitudinales ouvertes du plateau transversal avec les câbles et tuyauteries, à présenter et accoster le plateau ainsi garni sous le panneau d'appui de telle sorte que l'axe porteur traverse l'ouverture de passage du plateau jusqu'à ce que le premier élément sphérique s'engage dans le logement de réception où il est immobilisé par effet de pincement, le deuxième élément sphérique de l'axe porteur traversant librement l'ouverture en se prolongeant sous le râtelier multiple, à monter l'écran de l'organe de protection sous le râtelier et à immobiliser celui-ci sous le panneau d'appui par engagement du deuxième élément sphérique dans l'empreinte de réception du coupleur.

16. Procédé de montage selon la revendication 15, **caractérisé en ce qu'**on dispose d'abord l'écran de l'organe de protection sous le râtelier multiple préalablement garni avec les câbles et tuyauteries, et on engage ensuite l'ensemble formé par le râtelier et l'organe de protection sur l'axe porteur, pour l'immobiliser sous le panneau d'appui par ses deux éléments sphériques.

17. Procédé de montage selon l'une des revendications 15 ou 16, **caractérisé en ce que** l'immobilisation successive ou simultanée, sous le panneau d'appui, du râtelier multiple et/ou de l'organe de protection est réalisée sur une chaîne de fabrication en série de véhicules.

## Claims

1. Fitting assembly comprising a multiple supporting rack (3), a carrying pin (4) which is suitable for supporting the rack, is fixed by one of its ends to the underside of a loadbearing panel (1) such as the floor of a motor vehicle passenger compartment, and extends downwards at right angles from this panel, which rack (3) supports cables, pipes or the like (2) laid parallel to, and underneath, the surface of the loadbearing panel, and a protective clamping member (5) mounted underneath the rack to press and immobilize it against the panel, the carrier pin projecting externally and comprising, concentric with this pin, a first (8) and a second (9) separate spherical elements superposed and suitable for attaching the rack (3) and the protective member (5), respectively, one below the other, to said pin, these first and second spherical elements engaging with clamp means (13, 21) on the rack and on the protective member, respectively, to keep them in a predetermined position underneath the loadbearing panel (1), said rack having a transverse plate (10) comprising approximately in its centre an opening (11) for the passage of the second spherical element (9) of the carrying pin (4), this opening being extended within the multiple rack (3) towards the loadbearing panel (1) by a circular collar (12) defining a housing (13) for receiving and holding the first spherical element (8) of the carrying pin (4), this spherically shaped housing having a flared end part (14) directed towards the loadbearing panel (1), away from the through opening (11), which assembly is **characterized in that** the carrying pin comprises, projecting outwardly and concentric with this pin, a first (8) and a second (9) separate spherical elements superposed and suitable for attaching the multiple rack (3) and the protective member (5), respectively, one below the other, to said pin, these first and second spherical elements engaging with clamp means (13, 21) on the multiple supporting rack and on the protective member, respectively, to keep them in a predetermined position underneath the loadbearing panel (1), the two spherical elements (8, 9) having different diameters, the first element (8), which is the nearest to the loadbearing panel (1) and supports the multiple supporting rack (3), having a larger diameter than the second element, which is the furthest from the panel and supports the protective member (5).

2. Assembly according to Claim 1, **characterized in that** the second spherical element (9) of the carrying pin (4) is on the tip of this pin, at its opposite end from that fixed to the loadbearing panel (1).

3. Assembly according to Claim 1, **characterized in that** the carrying pin (4) is fixed to the underside of the loadbearing panel (1) by welding.

4. Assembly according to Claim 1, **characterized in that** the carrying pin (4) is fixed to the underside of the loadbearing panel (1) by screw means.

5. Assembly according to Claim 1, **characterized in that** the carrying pin (4) is fixed to the underside of the loadbearing panel (1) by die forging.

6. Assembly according to Claim 1, **characterized in that** the end part (14) of the collar (12) of the rack (3) has a wall thin enough to give it a limited ability to expand outwards, such as to accommodate the insertion of the first spherical element (8) of the carrying pin (4) into the housing and has radial slots defining teeth capable of flexing slightly outwards to receive the first spherical element (8) in the housing (13) .

7. Assembly according to Claim 6, **characterized in that** the diameter of the opening (11) of the rack (3) for the passage of the carrying pin (4) in its centre is greater than the diameter of the second spherical element (9).

8. Assembly according to either of Claims 6 and 7, **characterized in that** the transverse plate (10) of the rack (3) has a plurality of parallel ribs (15) projecting from this transverse plate, defining mutually parallel longitudinal opening grooves on either side and extending along the length of the plate for the reception of the cables and pipes (2).

9. Assembly according to Claim 8, **characterized in that** the longitudinal grooves (16) in the rack (3) are formed in the transverse plate (10) on either side of the carrying pin (4).

10. Assembly according to Claim 6, **characterized in that** the protective clamping member (5) of the rack (3) consists partly of a screen (18) suitable for being laid approximately parallel to the transverse plate (10), and partly of a coupler (19) positioned in line with the carrying pin (4) and comprising an open cavity (21) whose diameter is approximately equal to that of the second spherical element (9) on the pin, which engages in it to an appropriate depth, in such a way that the screen is applied firmly to the underside of the transverse plate and clamps the rack against the loadbearing panel (1).

11. Assembly according to Claim 10, **characterized in that** the screen (18) of the clamping member (5) has in its centre a circular collar (33) that circumscribes the carrying pin (4) and presses against the inside of an opposing recess (34) on the underside of the transverse plate (10).

12. Assembly according to either of Claims 10 and 11, **characterized in that** the coupler (19) of the clamping member (5), fitted to the screen (18), has a well (20) comprising the cavity (21) in which the second spherical element (9) of the carrying pin (4) is received, said well (20) being extended upwards towards the loadbearing panel (1) by a flared region (22), in such a way as to guide this pin as it is inserted into the cavity (21) of the coupler.

13. Assembly according to Claim 12, **characterized in that** the material of the coupler (19) of the clamping member (5) has a certain elasticity allowing it to act as a holding clamp for the second spherical element (9) of the carrying pin (4), following insertion of the latter into its cavity (21).

14. Assembly according to any one of Claims 10 to 13, **characterized in that** the coupler (19) of the clamping member (5) has at least one thin expandable collar (23) adjacent to the cavity (21) receiving the second spherical element (9) of the carrying pin (4).

15. Method of fitting to a carrying pin an assembly consisting of a supporting rack and a clamping member, according to Claim 10, **characterized in that** it consists firstly in loading the open longitudinal grooves of the transverse plate with the cables and pipes; presenting the loaded plate to the underside of the loadbearing panel in such a way that the carrying pin passes through the through opening of the plate until the first spherical element engages in the receiving housing where it is immobilized by being clamped, the second spherical element of the carrying pin passing freely through the opening and out beneath the multiple rack; screen of the protective member underneath the rack; and immobilizing the latter on the underside of the loadbearing panel by engaging the second spherical element in the receiving cavity of the coupler.

16. Fitting method according to Claim 15, **characterized in that** the screen of the protective member is first located underneath the multiple rack which has previously been loaded with the cables and pipes, and the assembly formed by the rack and the protective member is then engaged on the carrying pin, so as to immobilize it against the underside of the loadbearing panel by means of its two spherical elements.

17. Fitting method according to either of Claims 15 and 16, **characterized in that** the successive or simultaneous immobilization, underneath the loadbearing panel, of the multiple rack and/or of the protective member is carried out on a vehicle mass-production chain.

## Patentansprüche

1. Montageanordnung, die ein mehrfaches Traggestell (3), eine Tragachse (4), die das Gestell tragen kann, die über eines ihrer Enden unterhalb einer Auflagetafel (1) des Typs Kraftfahrzeug-Gehäuseboden befestigt ist, die sich ausgehend von dieser Tafel senkrecht nach unten erstreckt, aufweist, wobei das Gestell (3) Kabel, Rohrleitungen oder Ähnliches (2) trägt, die parallel an und unter der Oberfläche der Auflagetafel angeordnet sind, und ein Schutz- und Blockierorgan (5), das unter das Gestell montiert ist, um dieses gegen die Tafel zu drücken und stillzustellen, wobei die Tragachse außerhalb vorsteht und auf dieser Achse zentriert ein erstes (8) und ein zweites (9) getrenntes kugelförmiges Element aufweist, die übereinander liegen, die das Anhängen auf dieser jeweils des Gestells (3) und des Schutzorgans (5), eines unter dem anderen, ausführen können, wobei das erste und das zweite kugelförmige Element mit Mitteln (13, 21) zusammenwirken, die eine Zange bilden, die jeweils von dem Gestell und dem Schutzorgan getragen werden, um sie in bestimmter Position unter der Auflagetafel (1) zu halten, wobei das Gestell eine Querplatte (10) aufweist, die im Wesentlichen in ihrem zentralen Teil eine Öffnung (11) für das Durchgehen des zweiten kugelförmigen Elements (9) der Tragachse (4) aufweist, wobei diese Öffnung in dem mehrfachen Gestell (3) in Richtung der Auflagetafel (1) durch einen kreisförmigen Kragen (12) verlängert ist, der eine Unterbringungs- und Halteaufnahme (13) des ersten kugelförmigen Elements (8) der Tragachse (4) abgegrenzt, wobei diese Aufnahme mit Kugelform einen aufgeweiteten Endteil (14) gegenüber der Auflagetafel (1) der Durchgangsöffnung (11) entgegen gesetzt aufweist, **dadurch gekennzeichnet, dass** die Tragachse außen vorstehend und auf diese Achse zentriert ein erstes (8) und ein zweites (9) getrenntes kugelförmiges Element aufweist, die übereinander liegen, die das Anhängen auf dieser jeweils des mehrfachen Gestells (3) und des Schutzorgans (5), eines unter dem anderen, ausführen können, wobei dieses erste und zweite kugelförmige Element mit Mitteln (13, 21) zusammenwirken, die eine Zange bilden, die jeweils von dem mehrfachen Traggestell und dem Schutzorgan getragen werden, um sie in bestimmter Position unter der Auflagetafel (1) zu halten, dass die zwei kugelförmigen Elemente (8, 9) unterschiedliche Durchmesser aufweisen, wobei das erste Element (8), das der Auflagetafel (1) am nächsten liegt und das das mehrfache Traggestell (3) trägt, einen Durchmesser hat, der größer ist als der des zweiten Elements, das von der Tafel weiter entfernt ist und das Schutzorgan (5) trägt.

2. Anordnung nach Anspruch 1, **dadurch gekennzeichnet, dass** das zweite kugelförmige Element (9) der Tragachse (4) am Ende dieser Achse, an ihrem Ende, das dem, das an der Auflagetafel (1) befestigt ist, entgegengesetzt ist, vorgesehen ist.

3. Anordnung nach Anspruch 1, **dadurch gekennzeichnet, dass** die Tragachse (4) unter der Auflagetafel (1) durch Schweißen befestigt ist.

4. Anordnung nach Anspruch 1, **dadurch gekennzeichnet, dass** die Tragachse (4) unter der Auflagetafel (1) durch Anschrauben befestigt ist.

5. Anordnung nach Anspruch 1, **dadurch gekennzeichnet, dass** die Tragachse (4) unter der Auflagetafel (1) durch Gesenkschmieden befestigt ist.

6. Anordnung nach Anspruch 1, **dadurch gekennzeichnet, dass** der Endteil (14) des Kragens (12) des Gestells (3) eine ausreichend dünne Wand aufweist, um ihr eine begrenzte Dehnungsfähigkeit nach außen zu verleihen, die geeignet ist, um das Einführen des ersten kugelförmigen Elements (8) der Tragachse (4) in die Aufnahme zu gestatten, und radiale Schlitze aufweist, die Finger abgrenzen, die sich für das Aufnehmen des ersten kugelförmigen Elements (8) in der Aufnahme (13) leicht nach außen biegen können.

7. Anordnung nach Anspruch 6, **dadurch gekennzeichnet, dass** der Durchmesser der Öffnung (11) des Gestells (3) für das Durchgehen der Tragachse (4) in seinem zentralen Teil größer ist als der des zweiten kugelförmigen Elements (9).

8. Anordnung nach einem der Ansprüche 6 oder 7, **dadurch gekennzeichnet, dass** die Querplatte (10) des Gestells (3) mehrere parallele Rippen (15) aufweist, die in Bezug auf diese Querplatte vorstehen, die in Paaren offene Längsrillen (16) abgrenzen, die zueinander parallel sind und sich entlang der Länge der Platte zum Aufnehmen der Kabel und Rohrleitungen (2) erstrecken.

9. Anordnung nach Anspruch 8, **dadurch gekennzeichnet, dass** die Längsrillen (16) des Gestells (3) in der Querplatte (10) zu beiden Seiten der Tragachse (4) eingerichtet sind.

10. Anordnung nach Anspruch 6, **dadurch gekennzeichnet, dass** das Schutz- und Blockierorgan (5) des Gestells (3) aus einem Schirm (18) besteht, der sich im Wesentlichen parallel zu der Querplatte (10) erstrecken kann, und, im rechten Winkel zu der Tragachse (4) angeordnet, durch einen Verbinder (19), der einen offenen Hohlraum (21) aufweist, dessen Durchmesser im Wesentlichen gleich dem des zweiten kugelförmigen Elements (9) der Achse ist und sich dort derart auf einer geeigneten Tiefe eingefügt, dass sich der Schirm fest unter der Querplatte anlegt, indem das Gestell gegen die Auflageplatte (1) blockiert wird.

11. Anordnung nach Anspruch 10, **dadurch gekennzeichnet, dass** der Schirm (18) des Blockierorgans (5) in seiner Mitte einen kreisförmigen Kragen (33) aufweist, der die Tragachse (4) umgibt und sich gegen den Boden einer Aussparung (34) in Gegenüberlage, der unter der Querplatte (10) vorgesehen ist, drückt.

12. Anordnung nach einem der Ansprüche 10 oder 11, **dadurch gekennzeichnet, dass** der Verbinder (19) des Blockierorgans (5), das zu dem Schirm (18) gehört, eine Schale (20) aufweist, die den Hohlraum (21) zum Aufnehmen des zweiten kugelförmigen Elements (9) der Tragachse (4) aufweist, nach oben in Richtung der Auflagetafel (1) durch eine aufgeweitete Zone (22) derart verlängert, dass das Einführende dieser Achse in den Hohlraum (21) des Verbinders geführt wird.

13. Anordnung nach Anspruch 12, **dadurch gekennzeichnet, dass** der Werkstoff des Verbinders (19) des Blockierorgans (5) eine relative Elastizität aufweist, um es ihm zu erlauben, eine Zange zum Halten des zweiten kugelförmigen Elements (9) der Tragachse (4) nach dem Einführen dieser in seinen Hohlraum (21) zu bilden.

14. Anordnung nach einem der Ansprüche 10 bis 13, **dadurch gekennzeichnet, dass** der Verbinder (19) des Blockierorgans (5) mindestens einen dünnen, dehnbaren Kragen (23) im rechten Winkel zu dem Hohlraum (21), der das zweite kugelförmige Element (9) der Tragachse (4) aufnimmt, aufweist.

15. Verfahren zum Montieren auf eine Tragachse einer Einheit, die aus einem Traggestell und einem Blockierorgan nach Anspruch 10 besteht, **dadurch gekennzeichnet, dass** es zuerst darin besteht, die offenen Längsrillen der Querplatte mit Kabeln und Rohrleitungen zu versehen, die so versehene Platte unter der Auflagetafel derart zu präsentieren und anzudocken, dass die Tragachse die Durchgangsöffnung der Platte durchquert, bis sich das erste kugelförmige Element in die Unterbringungsaufnahme eingefügt, in der es durch Klemmwirkung stillgestellt wird, wobei das zweite kugelförmige Element der Tragachse die Öffnung frei durchquert, indem es sich unter dem mehrfachen Gestell verlängert, den Schirm des Schutzorgans unter das Gestell zu montieren und dieses unter der Auflageplatte durch Einfügen des zweiten kugelförmigen Elements in den Aufnahmeabdruck des Verbinders stillzustellen.

16. Montageverfahren nach Anspruch 15, **dadurch gekennzeichnet, dass** man zuerst den Schirm des Schutzorgans unter dem mehrfachen Gestell, das zuvor mit den Kabeln und Rohrleitungen versehen wurde, anordnet und dann die Einheit, die aus dem Gestell und dem Schutzorgan besteht, auf der Tragachse einrastet, um sie unter der Auflagetafel durch ihre zwei kugelförmigen Elemente stillzustellen.

17. Montageverfahren nach einem der Ansprüche 15 oder 16, **dadurch gekennzeichnet, dass** das aufeinander folgende oder gleichzeitige Stillstellen des mehrfachen Gestells und/oder des Schutzorgans unter der Auflageplatte auf einer Kraftfahrzeug-Serienfertigungslinie erfolgt.
